# EUROPÄISCHE PATENTSCHRIFT

(11) **EP 3 321 551 B1**
(45) Veröffentlichungstag und Bekanntmachung des Hinweises auf die Patenterteilung: **17.02.2021**
(21) Anmeldenummer: 16002369.3
(22) Anmeldetag: 09.11.2016
(51) Int. Cl.: F16K 37/00, F16K 31/04

(54) **VIRTUELLER FLANSCH FÜR ARMATUREN**
VIRTUAL FLANGE FOR FITTINGS
BRIDE VIRTUELLE POUR ROBINETTERIES

(43) Veröffentlichungstag der Anmeldung: 16.05.2018
(73) Patentinhaber: Sacharowitz, Fabian, 12109 Berlin (DE); Sacharowitz, Steffen, 10715 Berlin (DE); Sacharowitz, Axel, 10829 Berlin (DE)
(72) Erfinder: Sacharowitz, Fabian, 12109 Berlin (DE); Sacharowitz, Steffen, 10715 Berlin (DE); Sacharowitz, Axel, 10829 Berlin (DE)
(74) Vertreter: Bittner, Thomas L.

(56) Entgegenhaltungen:
- WO-A1-2014/029699
- US-A1- 2009 032 114

## Beschreibung

Die vorliegende Erfindung betrifft ein mobiles Drehgerät (4) für Armaturen (1) in Wasser-, Gas-, Fernwärme- und Fernkälteversorgungsleitungen, der Abwasserentsorgung sowie in Transportleitungen für Öl und Gas, das kabellos Stellaufträge aus einem zentralen IT-System (2) erhalten, diese ausführen und sodann die Erledigung sowie die dabei erfassten Zustandsdaten (3) kabellos an das zentrale IT-System (2) übertragen kann.

### Einleitung

Wesentliche Bestandteile von Rohrieitungssystemen sind Armaturen (1). Armaturen (1) sind von zentraler Bedeutung, da sie die Möglichkeit bieten ins Netz einzugreifen. Zur Steuerung der Volumenströme sind Armaturen (1) genauso erforderlich, wie bei Arbeiten im Netz oder im Schadensfall, wenn sie die Rohrleitung zuverlässig sperren müssen.

In den Flächennetzen der Wasser-, Gas-, Fernwärme- und Femkälteversorgung, der Abwasserentsorgung sowie in Transportleitungen für Öl und Gas sind Nennweiten im Bereich von DN 25 bis DN 2000 anzutreffen, vereinzelt sind auch Nennweiten unter DN 25 und über DN 2000 verbaut. Die meisten Armaturen (1) sind auch heute noch nicht mit einem Stellantrieb automatisiert und befinden sich im Normalfall in der Offen-Stellung.

Sichere und flexible Rohrleitungssysteme erfordern funktionierende Armaturen (1). Eine Armatur (1) ist in einem guten Zustand, wenn sie (leicht-) gängig ist und die Leitung im geschlossenen Zustand versperrt. Um die Funktionalität einer Armatur (1) langfristig sicher zu stellen, muss diese instandgehalten werden. Die Instandhaltung besteht gemäß DIN 31051 aus Inspektion (Identifizierung des Ist-Zustandes), Wartung (Erhaltung des Sollzustandes), Instandsetzung (Wiederherstellung des Ist-Zustandes) und Verbesserung. Die ersten drei Maßnahmen der Armatureninstandhaltung werden durch Betätigung, also durch Schließen und Öffnen, realisiert. Funktionsfähige Armaturen (1) erfüllen ihre Aufgabe zuverlässig und ermöglichen die Umsetzung flexibler Betriebskonzepte, geringe Versorgungsausfälle bei Baumaßnahmen und geringe Ausfallkosten im Fall von Havarien.

Eine langfristig effiziente Instandhaltungsstratagie für Armaturen (1) orientiert sich an deren Zustand. Idealerweise werden Wartungsmaßnahmen zustandsorientiert "so selten wie möglich, aber so häufig wie nötig" durchgeführt. Neben der gesicherten Funktionalität der Armaturen (1) lassen sich durch eine "zustandsorientierte Wartung" folgende Effizienzpotentiale realisieren:
- Optimierter Ressourceneinsatz
- Maximierte Lebensdauer der Armaturen (1), dadurch geringere Austauschinvestitionen

Notwendige Bedingung für eine zustandsorientierte Armaturenwartung sind objektive Zustandsdaten (3). Wie oben dargestellt beschreiben die erforderlichen Betätigungsmomente in Verbindung mit der genauen Anzahl der Umdrehungen für einen kompletten Hub, sowie die Position, in der die Armatur (1) belassen wird, den Zustand einer Armatur (1) objektiv.¹
¹ Treder, A.; Wellnitz, M.; Haueisen, S.; Thamsen, P.U.: "Zustandsorientierte Instandhaltung von erdverlegten Armaturen in der Wasserverteilung", 11. Tagung "Technische DiagnostiK 2014", Selbstverlag An-Institut Fluid- und Pumpentechnik, S. 41-49, Merseburg, Oktober 2014

Neben einer zustandsorientierten Instandhaltung zielen neue Betriebskonzepte von Rohrleitungssysteman darauf ab, die Versorgung sicherer und den Betrieb effizienter zu machen, indem zB Havariesektionen² definiert werden, das Medium flexibel aus verschiedenen Produktionsstätten/ Übergabepunkten "abgeholt" wird und/ oder die Energieeffizienz durch dynamisch-flexible Druckzonen gesteigert wird (Neue Betriebskonzepte ).
² Als Havariesektion wird ein definiertes Gebiet des Rohrleitungssystems verstanden, an dessen Grenze Armaturen angeordnet sind, mit deren Hilfe die Zone vom übrigen Rohrleitungssystem separiert werden kann.

Betreiber von Rohrleitungssystemen betreiben und managen ihre Rohrleitungssysteme zunehmend unter Zuhilfenahme eines zentralen IT-Systems (2). Betriebs-, Zustands (3)- und Lagedaten der Komponenten des abgebildeten Rohrleitungssystems werden gespeichert und können dargestellt werden, um so den effizienten Betrieb und die Instandhaltung des Rohrleitungssystems zu unterstützen.

Muss eine Armatur (1) betätigt werden, entspricht es immer noch dem Stand der Technik, dass Mitarbeiter des Betreibers des Rohrleitungssystems zu der betreffenden Armatur (1) fahren, um diese manuell mit Hilfe eines Vierkantschlüssels zu betätigen.

Weit verbreitet ist dabei die händische Dokumentation der Maßnahme auf Papier-Formularen, die physisch archiviert werden, um die Durchführung zu dokumentieren. In das Formular werden - wenn überhaupt - subjektive Einschätzungen über die Gängigkeit der Armatur (1) eingetragen (z. B. "schwergängig"). Informationen zu Drehmomenten oder zur Gangzahl (Anzahl Umdrehungen bis zum Schluss) werden zumeist nicht erhoben.

Nachteilig bei der manuellen Betätigung sind z. T. hohe körperliche Beanspruchungen der Mitarbeiter, hoher Personalaufwand sowie lange Reaktionszeiten. Weiter nachteilig ist, dass keine genauen Zustandsdaten (3) der Armatur (1) erfasst und kabellos an ein zentrales IT-System (2) übertragen werden können. Allenfalls Ist es denkbar, dass die Stellung (offen/geschlossen/Zwischenstellung) sowie eine subjektive Beurteilung der Gängigkeit der Armatur (1) manuell in das zentrale IT-System (2) eingetragen werden. Auch stehen die Zustandsdaten (3) keinesfalls unmittelbar im zentralen IT-System (2) zur Verfügung.

Zunehmend werden digitale Formulare eingesetzt, d. h. die Maßnahmen werden digital auf einem mobilen Gerät dokumentiert (z. B. Touch Pad, Handy, Notebook o. ä.) und später mit einem zentralen IT System (2) synchronisiert. Vorteil dieser Systeme ist, dass die Ausführung des Stellauftrags in dem zentralen IT-System (2) abgebildet werden und so im gesamten Unternehmen zur Verfügung stehen kann.

Nachteilig ist, dass auch hier - wenn überhaupt - lediglich subjektive Daten zum Armaturenzustand (3) erfasst und in das digitale Formular eingetragen werden. Objektive Armaturenzustandsdaten (3), auf deren Basis z. B. eine zustandsorientierte Instandhaltung möglich wäre, werden nicht erfasst und entsprechend nicht mit der Armatur (1) verknüpft bzw. dem zentralen IT System (2) zur Verfügung gestellt.

Neben der rein manuellen Bedienung mittels eines Vierkantschlüssels entspricht es dem Stand der Technik, elektrische, benzinbetriebene oder pneumatische mobile Drehgeräte (4) zum Stellen von Armaturen (1) zu verwenden. Aus dem deutschen Patent DE 102006015325 ist ein System zum Bedienen von erdverlegten Armaturen (1) bekannt. Das darin als Teil des Systems beschriebene mobile Drehgerät (4) für Armaturen (1) ist in der Lage, Zustandsdaten (3) der Armatur (1) zu erfassen. Zudem ist aus dieser Erfindung eine feste aber lösbare Fixierung des mobilen Drehgerätes (4) über einen mobilen Adapter an einer fest im Erdreich eingelassenen Trageplatte bekannt. Nachteilig an dieser Erfindung ist, dass das Drehgerät (4) des dort beschriebenen Systems nicht so gestaltet ist, kabellos Stellaufträge eines zentralen IT-Systems (2) zu empfangen und die Erledigung des Stellauftrags sowie erfasste Zustandsdaten (3) kabellos an ein zentrales IT-System (2) zu senden. Damit erfordert eine zustandsorientierte Wartung unter Zuhilfenahme eines zentralen IT-Systems (2) einen aufwendigen Prozess zur Übertragung der Daten in das zentrale IT-System (2). Denkbar ist es, die Daten manuell in das zentrale IT-System (2) einzugeben, auf magnetischen Datenträgern zwischen zu speichern oder mittels eines Kabels vom mobilen Drehgerät (4) in ein zentrales IT-System (2) zu übertragen. Alle Varianten erfordern einen vergleichsweise hohen Aufwand, sind fehleranfällig und erfordern besonders geschultes Personal. Die Implementierung einer zustandsabhängigen Instandhaltung ohne Bereitstellung der Zustandsdater. (3) im zentralen IT-System (2) ist dagegen wenig attraktiv. Schließlich ist der Sinn eines zentralen IT-Systems (2), das Rohrleitungsnetz möglichst genau abzubilden.

Schließlich können Armaturen (1), dem Stand der Technik entsprechend, dauerhaft fest automatisiert werden. Dazu werden Stellantriebe dauerhaft fest auf die Armatur (1) geflanscht und über eine Kabelverbindung mittels einer zumeist extern verbauten Kommunikationseinheit, etwa einer SPS, in ein zentrales IT-System (2) eingebunden. Aus dem zentralen IT-System (2) erhält der Stellantrieb den Befehl zum Betätigen der Armatur (1). Zustandsdaten (3) von Stellantrieb oder Armatur (1) können dem Stand der Technik entsprechend von der externen Kommunikationseinheit nach Ausführung des Stellauftrags zurück in das zentrale IT-System (2) übertragen werden. Eine mit einem Stellantrieb dauerhaft fest ausgerüstete Armatur (1) ermöglicht nicht nur die Realisierung neuer Betriebskonzepte. Mit Hilfe eines dauerhaft fest installierten Stellantriebs kann darüber hinaus die Armatur (1) automatisiert instand gehalten werden, indem sie ausreichend regelmäßig betätigt wird. Dabei kann "ausreichend regelmäßig" zustandsorientiert bestimmt werden. Mit geeigneter externen Technik verbunden, können dauerhaft fest installierte Stellantriebe neben dem Betriebszustand, also der Stellung der Armatur (1), das zum Betätigen der Armatur (1) erforderliche Drehmoment über den gesamten Stellvorgang messen und an ein zentrales IT-System (2) versenden. Mit diesen Informationen kann im zentralen IT-System (2) der Zustand einer Armatur (1) objektiv bestimmt werden, Auf Basis objektiver Zustandsdaten (3) kann im Zeitablauf ein optimiertes Wartungsintervall bestimmt werden und zugleich dokumentiert werden, dass die Armatur (1) zuverlässig funktioniert

Nachteilig hierbei sind zum einen die hohen Kosten für die Ausrüstung einer Armatur (1) mit einem dauerhaft fest installierten Stellantrieb. So müssen neben dem Stellantrieb in der Regel ein Schaltschrank und im Falle einer erdverlegten Armatur (1) ein Schachtbauwerk errichtet werden. Zudem müssen ein Strom- und ein Kommunikationskabelanschluss zur Verfügung gestellt werden. Selbstverständlich steht der Antrieb aufgrund der festen Zuordnung zur Armatur (1) nicht für die Betätigung anderer Armaturen (1) zur Verfügung.

Aus dem europäischen Patent 2708967 sind Stellantriebe bekannt, die ausgestaltet sind, Stellaufträge aus einem zentralen IT-System (2) kabellos zu erhalten und nach Ausführung des Stellauftrags die Erledigung sowie optional erfasste Zustandsdaten (3) kabellos an das zentrale IT-System (2) zu senden. Aus dem Patent DE 102006015325 ist zudem bekannt, einen Stellantrieb für die dauerhaft feste Automatisierung erdverlegter Armaturen (1) ohne Schachtbauwerk direkt ins Erdreich einzubauen, indem der Stellantrieb auf einer Trageplatte oder in oder an einem sonstig verdrehsicher im Erdreich verankerten Gegenstand fixiert wird.

Mit einer Kombination beider Lösungen können hohe Nebenkosten bei der festen dauerhaften Automatisierung eingespart werden, weil Armaturen (1) weitgehend ohne zusätzliche Infrastruktur und ohne hohe Tiefbaukosten aus dem zentralen IT-System (2) gesteuert werden können und Zustandsdaten (3) an das zentrale IT-System (2) übertragen werden können.

Nachteilig an den genannten Lösungen bzw. einer Kombination beider Lösungen ist, dass weiterhin ein Stellantrieb fest und dauerhaft einer Armatur (1) zugeordnet ist. Trotz der vergleichsweise geringen Kosten einer dauerhaft festen Automatisierung mittels der in den Veröffentlichungen genannten Lösungen, bleibt die Automatisierung in vielen Fällen unwirtschaftlich.

Insbesondere aufgrund der hohen Kosten ist der Automatisierungsgrad in vielen Rohrleitungssystemen weiterhin gering. Da zudem eine zustandsorientierte Instandhaltung auf Basis bekannter Lösungen mittels mobiler Drehgeräte (4) aufwendig ist (s. o.), müssen die Betreiber von Rohrleitungssystemen daher zur Instandhaltung ihrer Armaturen (1) weiterhin nicht unerhebliche Ressourcen vorsehen, um die Armaturen (1) im Rahmen einer institutionalisierten Strategie instand zu halten.

Neben den dargestellten Lösungen zum Stellen von Armaturen (1) sind Systeme bekannt, die den Zustand von Armaturen (1) kabellos dokumentieren sollen. Oftmals werden dazu beispielsweise Scan-Codes an der Armatur (1) angebracht. Mittels dieses Codes kann ein geeignetes Endgerät, etwa ein entsprechend ausgestattetes Smartphone, Stammdaten aus dem zentralen IT-System (2) abfragen und ggf. neue Daten in das zentrale IT-System (2) kabellos übertragen. Bei den Daten kann es sich auch um Zustandsdaten (3) handeln, etwa die Information, dass die Armatur (1) geöffnet bzw. geschlossen wurde. Anstatt vieler sei hier auf den "Valve-Installation-Tracker" des Unternehmens AVK UK Ltd. hingewiesen (http://www.avkuk.co.uk/en-gb/downloads/avit-avk-valve-Installation-tracker). Nachteilig an derartigen Lösungen ist offensichtlich, dass mit ihnen die Armatur (1) nicht gestellt werden kann. Erforderlich sind daher eine separate Stellung sowie die Eingabe dieser Informationen durch einen Mitarbeiter des Betreibers. Eine semiautomatische Stellung mittels eines Stellbefehls, ausgelöst direkt aus einem zentralen IT System (2) mit entsprechender Rückmeldung, erfolgt dagegen nicht.

Dokumente US2009032114 und WO2014029699 offenbaren austauschbare, abmontierbare Ventildrehgeräte, die jedoch keine Identifizierungsmittel in Form eines Lesegerätes und/oder eines Satelliten-Empfänger beinhalten.

Die dargestellten Nachteile des Stands der Technik werden durch die in Ansprüchen 1 und 10 beschriebene Erfindung vermieden.

Der Vorteil der in Anspruch 1 beschriebenen technischen Lösung ist es, die für eine zustandsorientierte Instandhaltung erforderlichen Zustandsdaten (3) kabellos in ein zentrales IT-System (2) übertragen zu können. Weiterer Vorteil ist, dass auch Armaturen (1), die nicht dauerhaft fest mit einem Stellantrieb ausgestattet sind, aus einem zentralen IT-System (2) heraus durch eine kabellose Übertragung des Stellauftrags gestellt werden können und dabei der Zustand der betreffenden Armatur (1) in einem zentralen IT-System (2) durch eine kabellose Übertragung von Zustandsdaten (3) zurück in das zentral IT-System (2) unmittelbar dargestellt werden kann. In beiden Fällen lässt sich das zu steuernde Netz entsprechend besser über das zentrale IT-System (2) abbilden. Im ersten Fall kann der Zustand von Armaturen (1), die nicht einem Stellantrieb fest zugeordnet sind, im zentralen IT-System (2) dargestellt werden. Im zweiten Fall kann eine Armatur (1) vom zentralen IT-System (2) behandelt und dargestellt werden, als ob sie mit einem festen Stellantrieb ausgestattet ist. Der Unterschied besteht nur noch in der Schnelligkeit der Stellung, die in vielen Fällen nicht relevant ist oder jedenfalls nicht den Aufwand rechtfertigt, eine Armatur (1) dauerhaft mit einem Stellantrieb auszustatten.

Entsprechend wird es mit der im Hauptanspruch beschriebenen technischen Lösung möglich sein, sukzessive alle Armaturen (1) ohne hohen Aufwand und aufwendige Schulung der ausführenden Mitarbeiter über ein zentrales IT-System (2) abzubilden, auch wenn diese nicht mit einem fest zugeordneten Stellantrieb ausgerüstet sind. Dies hat vor allem folgende Vorteile:
- Die für den Betrieb des Netzes Verantwortlichen können über das zentrale IT-System (2) den Zustand aller Armaturen (1) sofort ermitteln. Dies kann im Schadensfall, etwa einem Rohrbruch, helfen, die Notfallmaßnahmen erheblich effektiver zu gestalten. So kann bspw. im Falle eines Wasserrohrbruchs vermieden werden, dass ein einzelner Mitarbeiter zum Schließen einer Armatur (1) abgestellt wird, die er aufgrund des erforderlichen Stellmoments gar nicht alleine schließen kann.
- Durch die kabellose Übertragung der Zustandsdaten (3) einer Armatur (1) in ein zentrales IT-System (2) lässt sich die Entwicklung des Zustands von Armaturen (1) über einen längeren Zeitraum verfolgen. Dadurch lassen sich Wartungszyklen zustandsabhängig festlegen, was den Instandhaltungsaufwand deutlich reduziert.
- Automatische Dokumentation des Instandhaltungsaufwands.
- Komplettierung der digitalen Netzdokumentation durch Darstellung in einem zentralen IT-System (2), etwa einem Geoinformationssystem (GIS) (8). Dadurch stehen die aktuellen Zustandsdaten (3) potentiell allen Mitarbeitern jederzeit zur Verfügung - über mobile Anwendungen auch vor Ort bei Arbeiten am Netz.
- Einbindung der Instandhaltungsmaßnahmen und der Zustandsdaten (3) ins ERP System, damit die Instandhaltungskosten bzw. die Life-Cycle Kosten der Armaturen (1) transparent werden (Asset-Management).
- Optimierte Investitionsplanung durch Prognosen zur verbleibenden Nutzungsdauer der Armaturen (1).

Die zusätzliche kabellose Übertragung von Stellbefehlen aus einem zentralen IT-System (2) heraus an ein mobiles Drehgerät (4) hat insbesondere folgende Vorteile:
- Die aktive Steuerung des Netzes durch Betätigen von Armaturen (1) und die Darstellung des Zustands der Armaturen (1) erfolgen über dasselbe zentrale IT-System (2).
- Steuernde Eingriffe berücksichtigen zwangsläufig den Zustand der Armaturen (1).
- Die Kenntnis des Zustands aller Armaturen (1) in Bezug auf Offen / Geschlossen wird verbessert.
- Es wird vermieden, dass unnötige Stellaufträge erfolgen, etwa solche, in der eine tatsächlich offene Armatur (1) geöffnet oder eine geschlossene geschlossen werden sollen.
- Unmittelbare Verknüpfung aller Stellaufträge und der Zustandsdaten (3) mit dem Work-Force-Management.

### Technische Beschreibung

Bei der vorliegenden Erfindung handelt es sich um ein mobiles Drehgerät (4) für Armaturen (1), das mit einer Armatur (1) verbunden, sich so verhält, als wäre es stationär dieser Armatur (1) zugeordnet und über entsprechende (Kabel-) Infrastruktur ins zentrale IT-System (2) eingebunden ("Virtueller Flansch").

Das mobile Drehgerät (4) ist so ausgestaltet, dass es die Zustandsdaten (3) einer Armatur (1) messen und einem die Armatur (1) oder das mobile Drehgerät (4) eindeutig identifizierenden Code (5) zuordnen kann. Dies erfolgt z. B. über einen eingebauten Steuerungsrechner, etwa eine eingebaute (embedded) Linux- oder Windows Lösung oder einem Micro-Controller ohne Betriebssystem. Der Steuerungsrechner ist mit einem Kommunikationsmodul, etwa einem Mobilfunkmodem (10) ausgestattet, über das er von einem zentralen IT-System (2) kabellos (11) Stellaufträge empfangen sowie Zustandsdaten (3) und mindestens einem die Armatur (1) oder das mobile Drehgerät (4) identifizierenden Codes (5) an das zentrale IT-System (2) übermitteln kann.

Ebenfalls erfindungsgemäß ist es, dass die Verknüpfung der Zustandsdaten (3) mit dem eindeutigen Identifikations-Code (5) der Armatur (1) oder des mobilen Drehgeräts (4) durch eine externe Sende- bzw. Empfangsvorrichtung (9) erfolgt.

Die Zustandsdaten (3) der Armatur (1) inkl. des die Armatur (1) oder den mobilen Drehantrieb (4) eindeutig identifizierenden Codes (5) werden im zentralen IT-Systems (2) gespeichert und für mit entsprechenden Rechten versehenen Mitarbeitern zugänglich gemacht.

Zustandsdaten (3) können insbesondere sein:
- Stellung der Armatur (1) (Offen/Geschlossen/beliebige Zwischenstellung)
- Drehmoment-Weg-Kurve der Armatur (1)
- Gangzahl der Armatur (1) (Anzahl der Umdrehungen von "Offen" bis "Gesehlossen")
- Schließmoment der Armatur (1)
- Öffnungsmoment der Armatur (1)
- Schwingungen der Armatur (1) beim Stellen oder auch im statischen Zustand.

Bei einem zentralen IT-System (2) handelt es sich um eine oder mehrere vom Netzbetreiber zentral betriebenen Software zum Überwachen und Steuern der technischen Prozesse. Das zentrale IT-System (2) enthält z. B.:
- Leitstandsoftware zum Steuern und Überwachen von ferngesteuerten bzw. automatischen Komponenten des Rohrleitungssystems (z. B. Pumpen, Kompressoren, Armaturenstellantriebe),
- ein GIS (Geoinformationssystem) (8), in dem bestimmten ortfesten Gegenständen, in diesem Fall Komponenten eines Wasser-, Gas-, Fernwärme- und Fernkälte-, Abwasser-, Öl- oder Gasnetzes, genaue Ortsinformationen zugeordnet werden,
- eine Evaluationssoftware für Zustandsdaten (3) von Armaturen (1),
- ein Asset-Management System, das bestimmte Assets, etwa Armaturen (1), abbildet und Daten zu diesen aufbereitet und abrufbar macht,
- ein Work-Force-Management-System, mit dem sich bestimmte oder alle Ressourcen planen oder darstellen lassen sowie
- eine ERP Software (Enterprise-Resource-Planning), die bestimmte oder alle Geschäftsabläufe erfasst, darstellt und bei deren Management unterstützt.
- Weitere bzw. Kombinationen aus den oben dargestellten Softwarelösungen sind möglich.

Das zentrale IT-System (2) wird die Daten vom mobilen Drehgerät (4) regelmäßig über einen Router (14), der sich hinter einer Firewall (13) befindet, erhalten. Ggf. ist auch ein Server zwischengeschaltet, der die vom mobilen Drehgerät (4) stammenden Daten sammelt, ggf. entschlüsselt und über eine geeignete Schnittstelle an das zentrale IT-System (2) weiterreicht.

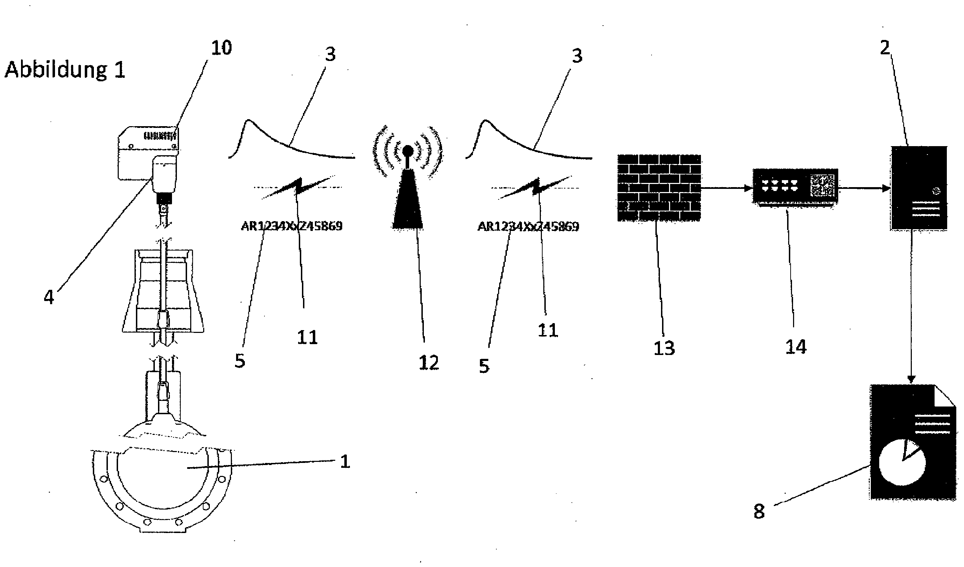

Abbildung 1 verdeutlicht die Übertragung zwischen mobilem Drehgerät (4) und dem zentralen IT-System (2) über das Mobilfunknetz. In diesem Fall ist das mobile Drehgerät (4) mit einem Mobilfunkmodem (10) ausgestattet, über das die Zustandsdaten (3) und der die Armatur (1) oder das mobile Drehgerät (4) eindeutig identifizierende Code (5) kabellos (11) an einen Mobilfunkmast (12) des jeweiligen Mobilfunkbetreibers und von dort weiter kabellos (11) oder über das Datenkabelnetz, eine Firewall (13), einen Router (14) sowie eine geeignete Schnittstelle, in das zentrale IT-System (2) des Netzbetreibers versendet werden. Die Daten können dabei vom mobilen Drehgerät (4) auch verschlüsselt werden und ggf. von dem zentralen IT-System (2) oder einem vorgelagerten Server entschlüsselt werden (end-zu-end-Verschlüsselung). Der vorgelagerte Server kann dabei auch auf einer besonderen Hardware betrieben werden. Die kabellose Versendung eines Stellbefehls oder sonstiger Daten einschließlich eines die Armatur (1) oder das mobile Drehgerät (4) eindeutig identifizierenden Codes (5) vom zentralen IT-System (2) an das mobile Drehgerät (4) verläuft über die gleichen Stellen in umgekehrter Richtung.

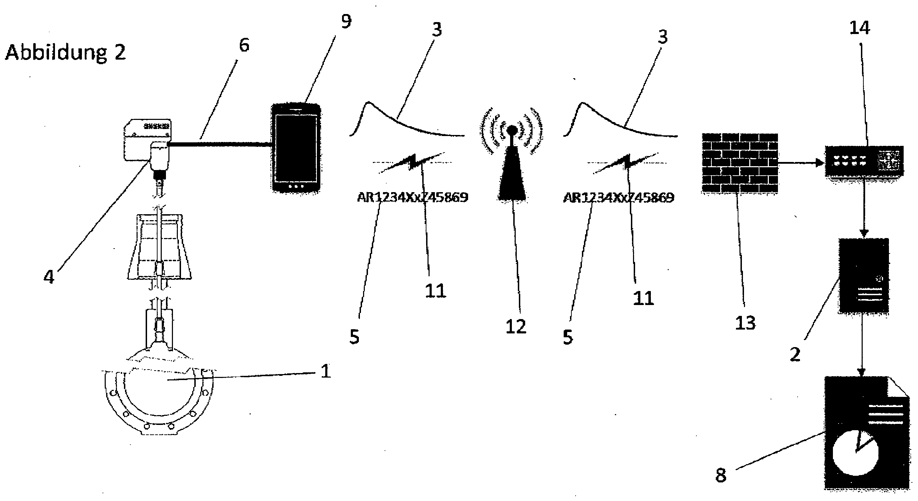

Abbildung 2 verdeutlicht die alternative, ebenfalls erfindungsgemäße Lösung, bei der die Daten nicht vom mobilen Drehgerät (4), sondern von einer externen kabelgestu̅tzt oder kabellos mit dem mobilen Drehgerät (4) verbundenen Sende- oder Empfangsvorrichtung (9) versendet bzw. empfangen werden.

Erfindungsgemäß sind auch andere, mindestens teilweise kabellose Übertragungsmöglichkeiten zwischen einem mobilem Drehgerät (4) bzw. einer externen kabelgestützt oder kabellos mit dem mobilen Drehgerät (4) verbundenen Sende- oder Empfangsvorrichtung (9), wie etwa W-LAN, Richtfunk, Satellitenfunk oder Bluetooth.

Bei der externen Sende- oder Empfangseinrichtung (9) kann es sich z. B. um einen Laptop, Tablet-Computer oder ein Smartphone mit entsprechenden Vorrichtungen für das kabellose Senden oder Empfangen von Daten handeln.

Erfindungsgemäß ist es ebenfalls, kabellos Daten von anderen Vorrichtungen, die an oder in räumlicher Nähe zur Armatur (1) angeordnet sind und über eine geeignete kabelbasierte oder 7 kabellose Schnittstelle zum mobilen Drehgerät (4) verfügen, gemeinsam mit Zustandsdaten (3) und mindestens einen die Armatur (1) oder das mobile Drehgerät (4) identifizierenden Code (5) an ein zentrales IT-System (2) kabellos zu versenden. Bei der anderen Vorrichtung kann es sich etwa um Daten einer Temperatur-, Druck-, Durchflussmessung oder sonstige Daten handeln.

### Ausführungsbeispiel

Zum besseren Verständnis der Erfindung wird sie im Folgenden anhand von detaillierten Ausführungsbeispielen mit Bezug auf die Abbildungen 1-3 beschrieben. Es ist jedoch klar, dass diese nicht als limitierend zu verstehen sind, sondern dass die Erfindung alleine durch die Ansprüche definiert ist.

**Ausführungsbeispiel 1:** Eine Armatur (1), z. B. eine erdverlegte. Armatur (1) in einem Wasserversorgungsnetz oder einem anderen Versorgungsnetz, soll geschlossen werden. Ein Mitarbeiter des Netzbetreibers führt die Stellung mit dem mobilen Drehgerät (4) aus. Das mobile Drehgerät (4) misst bei der Stellung die Drehmoment-Weg-Kurve in Abhängigkeit von der Umdrehungszahl. Nach Durchführung des Stellauftrages sendet das mobile Drehgerät (4) die Zustandsdaten (3) der Armatur (1) an das zentrale IT-System (2). Im zentralen IT-System (2) wird die Armatur (1) sodann als geschlossen dargestellt. Ggf. können der Drehmomentverlauf oder sonstige Zustandsdaten (3) nun mittels einer geeigneten Abfrage vom zentralen IT-System (2) abgerufen werden.

**Ausführungsbeispiel** 2: Eine Armatur (1), z, B. eine erdverlegte Armatur (1) in einem Wasserversorgungsnetz oder einem anderen Versorgungsnetz, muss geschlossen werden. Die Armatur (1) verfügt über einen RFID Chip auf dem der die Armatur (1) identifizierende Code (5) gespeichert ist. Das mobile Drehgerät (4) verfügt über einen RFID Kartenleser. Im zentralen IT System (2) ist ein Stellauftrag für diese Armatur (1) und ggf. gleichzeitig ein Arbeitsauftrag zur Ausrüstung der betreffenden Armatur (1) mit einem mobilen Drehgerät (4) generiert worden. Sobald das mobile Drehgerät (4) temporär mit der Armatur (1) verbunden ist und angeschaltet wird, identifiziert es mit Hilfe seines RFID Kartenlesers die Armatur (1), verbindet sich mit dem zentralen IT-System (2), erhält den der Armatur (1) zugeordneten Stellauftrag und führt diesen aus. Nach Durchführung des Stellauftrages sendet das mobile Drehgerät (4) die Erledigung des Auftrages inkl. der Zustandsdaten (3) der Armatur (1) an das zentrale IT-System (2). Im zentralen IT-System (2) wird die Armatur (1) sodann als geschlossen dargestellt. Ggf. können der Drehmomentverlauf oder sonstige Zustandsdaten (3) mittels einer geeigneten Abfrage vom zentralen IT-System (2) abgerufen werden. Wenn kein neuer Auftrag für das mobile Drehgerät (4) vorliegt, geht es in den Stand-by-Modus, bis es demontiert wird oder vom zentralen IT-System (2) geweckt wird, um z. B. einen neuen Stellauftrag auszuführen.

**Ausführungsbeispiel 3:** Eine Armatur (1), z. B. eine erdverlegte Armatur (1) in einem Wasserversorgungsnetz oder anderen Versorgungsnetzen, muss geschlossen werden. Im zentralen IT-System (2) ist ein Stellauftrag für eine Armatur (1) und ggf. gleichzeitig ein Arbeitsauftrag zur Ausrüstung der betreffenden Armatur (1) mit einem mobilen Drehgerät (4) generiert worden. Dem mobilen Drehgerät (4) ist im zentralen IT-System (2) ein identifizierender Code (5) zugewiesen. Ein Mitarbeiter teilt dem zentralen IT System (2) in geeigneter Weise mit, dass das mobile Drehgerät (4) mit dem es eindeutig identifizierenden Code (5) auf der zu stellenden Armatur (1) installiert ist. Dies kann sowohl über eine Eingabe am mobilen Drehgerät (4) oder an einer kabelgestützt oder kabellos mit dem mobilen Drehgerät (4) verbundenen externen Sende- oder Empfangsvorrichtung (9) erfolgen. Alternativ verfügt das mobile Drehgerät (4) über Mittel, die Armatur (1) selbst zu identifizieren, etwa Ober ein RFID-Lesegerät. Nun kann das mobile Drehgerät (4) vom zentralen IT-System (2) einen Stellauftrag für die Armatur (1) empfangen, da im zentralen IT-System (2) gespeichert ist, dass das mobile Drehgerät (4) temporär die Armatur (1) automatisiert. Nach Durchführung des Stellauftrages sendet das mobile Drehgerät (4) die Erledigung des Auftrages inkl. der Zustandsdaten (3) der Armatur (1) an das zentrale IT-System (2). Im zentralen IT-System (2) wird die Armatur (1) nun als geschlossen dargestellt. Ggf. können der Drehmomentverlauf oder sonstige Zustandsdaten (3) über eine geeignete Abfrage vom zentralen (T-System (2) abgerufen werden. Das mobile Drehgerät (4) geht In den Stand-by-Modus bis es vom zentralen IT-System (2) geweckt wird, um z. B. einen neuen Stellauftrag auszuführen. Wenn weitere Stellungen der Armatur (1) nicht mehr geplant sind, wird das mobile Drehgerät (4) von der Armatur (1) entfernt und z. B. zur nächsten Armatur (1) verbracht.

**Ausführungsbeispiel 4:** Eine Armatur (1), z. B. eine erdverlegte Armatur (1) in einem Wasserversorgungsnetz oder anderen Versorgungsnetzen, soll zum Zwecke der Instandhaltung inspiziert werden. Das mobile Drehgerät (4) verfu̅gt Ober eine Bluetooth-Schnittstelle (6). Im zentralen IT System (2) wird im Rahmen der Arbeitsvorbereitung festgelegt, dass die Armatur (1) inspiziert werden soll und ein entsprechender Arbeitsauftrag wird generiert. Der Arbeitsauftrag wird von einer mit dem mobilen Drehgerät (4) kabelgestützt oder kabellos verbundenen externen Sende- bzw. Empfangsvorrichtung (9) kabellos empfangen und über die Bluetooth-Schnittstelle (6) an das mobile Drehgerät (4) übertragen. Das mobile Drehgerät (4) führt die Zustandsmessung durch und überträgt die Zustandsdaten (3) über die Bluetooth-Schnittstelle (6) an die externe Sende- bzw. Empfangsvorrichtung (9). Diese sendet die Zustandsdaten (3) an das zentrale IT-System (2). Ggf. können der Drehmomentverlauf oder sonstige Zustandsdaten (3) nun mittels einer geeigneten Abfrage vom zentralen IT-System (2) abgerufen werden. Erfindungsgemäß ist es ebenfalls, dass die externe Sende- bzw. Empfangsvorrichtung (9) die Zustandsdaten (3) der Armatur (1) und des diese eindeutig identifizierenden Codes (5) zunächst speichert und erst später im Rahmen eines kabellosen Synchronisationsprozesses an das zentrale IT-System (2) weiterreicht.

**Ausführungsbeispiel 5:** Eine Armatur (1), z. B. eine erdverlegte Armatur (1) in einer Wassertransportleitung oder anderen Transportleitungen, soll zum Zwecke der Instandhaltung betätigt werden. Das mobile Drehgerät (4) verfügt über ein Display, ein Mobilfunkmodem (10) und einen GPS Empfänger. Im zentralen IT-System (2) wird im Rahmen der Arbeitsvorbereitung entschieden, welche Armaturen (1) inspiziert werden sollen. Durch das zentralen IT-System (2) wird ein Arbeitsauftrag generiert, der den die Armatur (1) identifizierenden Code (5), etwa die Geokoordinaten der Armatur (1), sowie weitere relevante Armaturenstammdaten enthält. Sobald das mobile Drehgerät (4) angeschaltet wird, gleicht es die Geodaten des GPS Empfängers mit den Geokoordinaten des im zentralen IT-System (2) hinterlegten Instandhaltungsauftrags ab. Nur wenn sich die Geodaten der Armatur (1) nicht eindeutig zuordnen lassen, weil sich mehrere Armaturen (1) in unmittelbarer Nähe befinden, listet das mobile Drehgerät (4) alle Armaturen (1) in einem Umkreis von x Metern auf seinem Display auf. Der die Instandhaltungsmaßnahme durchführende Mitarbeiter wählt die richtige Armatur (1) aus der Liste aus. Das mobile Drehgerät (4) verbindet sich mit dem zentralen IT-System (2) und erfragt weitere für die Ausführung der Instandhattungsmaßnahme relevante Daten. Dabei kann das mobile Drehgerät (4) beispielsweise auch mitgeteilt bekommen, dass es die Instandhaltungsmaßnahme um 4.11 Uhr morgens durchführen soll, da der Wasserverbrauch zu diesem Zeitpunkt minimal ist und eine Schließung der Armatur (1) zum Zweck der Instandhaltung deshalb möglich ist. Anschließend verschließen die Mitarbeiter, die das mobile Drehgerät (4) temporär mit der Armatur (1) verbunden haben, die Straßenabdeckung oder versehen die feste, aber lösbare Verbindung zwischen mobilem Drehgerät (4) und Armatur (1) und verlassen den Standort. Um 4.11 Uhr führt das mobile Drehgerät (4) die Instandhaltungsmaßnahmen inkl. der Messung der Zustandsdaten (3) der Armatur (1) durch. Über Mobilfunk übergibt das mobile Drehgerät (4) die gemessenen Zustandsdaten (3) inkl. des die Armatur (1) identifizierenden Codes (5) an das zentrale IT System (2), wo sie an geeigneter Stelle in der Datenbank abgelegt werden. Ein Programm des zentralen IT-Systems (2) evaluiert die Zustandsdaten (3). Auf Basis der Zustandsdaten (3) kann der Armatur (1) z. B. eine "Zustandsampel" zugewiesen werden. Oder es kann evaluiert werden, ob die Wartungszyklen der Armatur (1) verlängert, verkürzt oder gleich belassen werden sollen, oder ob eine Austauschinvestition in x Jahren vorgesehen werden muss. Die Informationen stehen anschließend für den Zugriff weiterer Programme des zentralen IT Systems (2) zur Verfügung. Z. B. kann das GIS Programm (8) die Drehmomentkurve, das maximale Betätigungsmoment, die genaue Gangzahl und die Zustandsampel anzeigen, wenn die Armatur (1) im GIS Programm (8) ausgewählt wird.

Es sei nochmals darauf hingewiesen, dass die hier genannten Ausführungsbeispiele unter Angabe vieler Details zum erleichterten Verständnis und zu einer umfangreichen Beschreibung der Erfindung angegeben wurden. Diese Details sind jedoch nicht als einschränkend aufzufassen. Der Erfindungsgegenstand, für den Schutz begehrt wird, ist stattdessen ausschließlich in den angehängten Ansprüchen definiert.

## Patentansprüche

1. Mobiles Drehgerät (4) für Armaturen (1) in Wasser-, Gas-, Fernwärme und Fernkälteversorgungsleitungen, der Abwasserentsorgung sowie in Transportleitungen für Öl und Gas, wobei das mobile Drehgerät (4)
- Mittel aufweist, um beim Ausführen eines Stellauftrags Zustandsdaten (3) der Armatur (1) aufzunehmen,
- Mittel aufweist, um die Zustandsdaten (3) und einen die Armatur (1) und / oder das mobile Drehgerät (4) identifizierenden Code (5) gemeinsam kabellos (11) zu versenden,
- Mittel aufweist, um die Armatur (1) eindeutig zu identifizieren, und
- als die Mittel, um die Armatur (1) eindeutig zu identifizieren, über mindestens eines von einem Lesegerät für RFID-Chips, einem Lesegerät für ein-, zwei- oder dreidimensionale Bar-, Strich- oder sonstige Codes und / oder über einen Empfänger für von Satelliten versendete Positionsdaten verfügt.

2. Mobiles Drehgerät (4) nach Anspruch 1, wobei das mobile Drehgerät (4) Mittel aufweist, um kabellos (11) einen Stellauftrag für eine Armatur (1) zu empfangen, mindestens einen die Armatur (1) oder das mobile Drehgerät (4) identifizierenden Code (5) zu empfangen.

3. Mobiles Drehgerät (4) nach einem der vorangehenden Ansprüche, wobei die Mittel, um die Zustandsdaten (3) und einen die Armatur (1) und / oder das mobile Drehgerät (4) identifizierenden Code (5) gemeinsam kabellos (11) zu versenden eine interne Sendeeinrichtung umfasst oder eine mit dem mobilen Drehgerät (4) über eine Schnittstelle (6) verbundene externe Sendeeirichtung (9).

4. Mobiles Drehgerät (4) nach Anspruch 2, wobei das kabellose (11) Empfangen von Stellaufträgen und mindestens eines die Armatur (1) oder das mobile Drehgerät (4) identifizierenden Codes (5) oder das kabellose (11) Versenden von Zustandsdaten (3) und mindestens eines die die Armatur (1) oder das mobile Drehgerät (4) identifizierenden Code über eine mit dem mobilen Drehgerät (4) über eine Schnittstelle (6) verbundene, externe Sende- bzw. Empfangsvorrichtung (9) erfolgen.

5. Mobiles Drehgerat (4) nach einem der Ansprüche 1 bis 4, wobei die Zustandsdaten (3) mindestens aus der Stellung der Armatur oder zusätzlich aus Drehmoment-Weg-Informationen der Armatur (1) oder Schwingungen der Armatur (1), jeweils beim Stellvorgang aufgenommen, bestehen.

6. Mobiles Drehgerät (4) nach einem der Ansprüche 1 bis 5, wobei das mobile Drehgerät (4) ausgestaltet ist, um eine feste aber lösbare Verbindung mit der Armatur (1) herzustellen.

7. Mobiles Drehgerät (4) nach einem der Ansprüche 1 bis 6, wobei die Mittel, um die Zustandsdaten (3) und einen die Armatur (1) und / oder das mobile Drehgerät (4) identifizierenden Code (5) gemeinsam kabellos (11) zu versenden ausgestaltet sind, Daten mittels hard- oder softwarebasierter Verschlüsselungstechnik zu verschlüsseln.

8. Mobiles Drehgerät (4) nach einem der Ansprüche 1 bis 7, wobei das mobile Drehgerät (4) Mittel aufweist, um Daten von weiteren Vorrichtungen, wie zum Beispiel Sensoren, kabelbasierte oder kabellose (11) zu empfangen und, gemeinsam mit Zustandsdaten (3) der Armatur und den mindestens einen die Armatur (1) oder das mobile Drehgerät (4) identifizierenden Code (5) an ein zentrales IT-System (2) gemeinsam kabellos (11) zu versenden.

9. System umfassend mindestens ein mobiles Drehgerät (4) gemäß einem der vorangehenden Ansprüche und ein zentrales IT-System (2), wobei das zentrale IT-System (2) ausgestaltet ist, kabellos (11) vom mobilen Drehgerät (4) versendete Zustandsdaten und mindesten einen die Armatur (1) oder das mobile Drehgerät (4) eindeutig identifizierenden Code (5) zu empfangen.

10. Verfahren zur zustandsorientierten Instandhaltung von nicht mit einem festen Drehantrieb ausgestatten Armaturen in Wasser-, Gas-, Fernwärme und Fernkälteversorgungsleitungen, der Abwasserentsorgung sowie in Transportleitungen für Öl und Gas welches folgende Schritte aufweist:
i) Durchführung der Stellung einer Armatur (1) mittels eines mobilen Drehgeräts (4) nach einem der Ansprüche 1 bis 8,
ii) Erfassung der Zustandsdaten (3) der Armatur (1) durch das mobile Drehgerät (4) während des Stellvorgangs,
iii) kabellose (11) Übertragung der Zustandsdaten (3) durch das mobile Drehgerät (4) in das zentrale IT-System (2), und
iv) kabellose (11) Übertragung eines die Armatur (1) oder das mobile Drehgerät (4) eindeutig identifizierenden Codes (5) durch das mobile Drehgerät (4), wobei als Mittel, um die Armatur (1) eindeutig zu identifizieren, mindestens eines von einem Lesegerät für RFID-Chips, einem Lesegerät für ein-, zwei- oder dreidimensionale Bar-, Strich- oder sonstige Codes und/oder einen Empfänger für von Satelliten versendete Positionsdaten benutzt wird.

11. Verfahren nach Anspruch 10 mit den weiteren Schritten
(i) Generierung eines Stellauftrags durch das zentrale IT-System (2) für eine Armatur (1), die nicht dauerhaft fest mit einem Stellantrieb ausgestattet ist, und
(ii) Kabellose (11) Übertragung des Stellauftrags auf das mobile Drehgerät (4) zusammen mit einem die Armatur (1) oder das mobile Drehgerät (4) identifizierenden Code (5),

12. Verfahren nach Anspruch 10 oder 11, wobei die kabellose (11) Übertragung des Stellauftrags und mindestens eines die Armatur (1) oder das mobile Drehgerät (4) eindeutig kennzeichnenden Codes (5) oder das Kabellose (11) Versenden von Zustandsdaten (3) und mindestens eines die Armatur (1) oder das mobile Drehgerät eindeutig kennzeichnenden Codes (5) mittels einer mit dem mobilen Drehgerat (4) über eine Schnittstelle (6) verbundene externen Sende- bzw. Empfangsvorrichtung (9) erfolgen.

## Claims

1. A mobile rotating device (4) for fittings (1) in water, gas, district heating and district cooling supply lines, waste water disposal and in transport lines for oil and gas, wherein the mobile rotating device (4)
- has means to receive status data (3) of the fitting (1) when executing a setting task,
- has means to send the status data (3) and a code (5) identifying the fitting (1) and/or the mobile rotating device (4) jointly in a wireless manner (11),
- has means to unambiguously identify the fitting (1) and
- has as the means to unambiguously identify the fitting (1) at least one of a reader for RFID chips, a reader for one-, two- or three-dimensional bar codes or other codes and/or a receiver for position data sent by satellites.

2. The mobile rotating device (4) according to claim 1, wherein the mobile rotating device (4) has means to receive in a wireless manner (11) a setting task for a fitting (1), to receive at least one code (5) identifying the fitting (1) or the mobile rotating device (4).

3. The mobile rotating device (4) according to one of the preceding claims, wherein the means for sending the status data (3) and a code (5) identifying the fitting (1) and/or the mobile rotating device (4) jointly in a wireless manner (11) comprises an internal transmitting device or an external transmitting device (9) connected to the mobile rotating device (4) via an interface (6).

4. The mobile rotating device (4) according to claim 2, wherein the wireless (11) receiving of setting tasks and at least one code (5) identifying the fitting (1) or the mobile rotating device (4) or the wireless (11) transmitting of status data (3) and at least one code (5) identifying the fitting (1) or the mobile rotating device (4) are accomplished via an external transmitting or receiving device (9) connected to the mobile rotating device (4) via an interface (6).

5. The mobile rotating device (4) according to one of claims 1 to 4, wherein the status data (3) consist of at least the position of the fitting or additionally of the torque-travel information of the fitting (1) or vibrations of the fitting (1), in each case recorded during the setting process.

6. The mobile rotating device (4) according to one of claims 1 to 5, wherein the mobile rotating device (4) is configured to make a fixed but detachable connection to the fitting (1).

7. The mobile rotating device (4) according to one of claims 1 to 6, wherein the means to send the status data (3) and a code (5) identifying the fitting (1) and/or the mobile rotating device (4) jointly in a wireless manner (11) are configured to encrypt data by means of hardware or software-based encryption technology.

8. The mobile rotating device (4) according to one of claims 1 to 7, wherein the mobile rotating device (4) has means to receive data from further devices such as, for example, sensors in a cable-based or wireless manner (11) and to send jointly with status data (3) of the fitting and the at least one code (5) identifying the fitting (1) or the mobile rotating device (4) to a central IT system (2) jointly in a wireless manner (11).

9. A system comprising at least one mobile rotating device (4) according to one of the preceding claims and a central IT system (2), wherein the central IT system (2) is configured to wirelessly (11) receive status data sent by the mobile rotating device (4) and at least one code (5) unambiguously identifying the fitting (1) or the mobile rotating device (4).

10. A method for status-oriented maintenance of fittings not fitted with a fixed rotary drive in water, gas, district heating and district cooling supply lines, waste water disposal and in transport lines for oil and gas which comprises the following steps:
i) executing the setting of a fitting (1) by means of a mobile rotating device (4) according to one of claims 1 to 8,
ii) acquiring the status data (3) of the fitting (1) through the mobile rotating device (4) during the setting process,
iii) wireless (11) transmission of the status data (3) through the mobile rotating device (4) into the central IT system (2) and
iv) wireless (11) transmission of a code (5) unambiguously identifying the fitting (1) or the mobile rotating device (4) through the mobile rotating device (4), wherein at least one of a reader for RFID chips, a reader for one-, two- or three-dimensional bar codes or other codes and/or a receiver for position data sent by satellites is used as the means to unambiguously identify the fitting (1).

11. The method according to claim 10, comprising the further steps
(i) generation of a setting task by the central IT system (2) for a fitting (1) which is not permanently connected fixedly to a setting drive, and
(ii) wireless (11) transmission of the setting task to the mobile rotating device (4) together with a code (5) identifying the fitting (1) or the mobile rotating device (4).

12. The method according to claim 10 or 11, wherein the wireless (11) transmission of the setting task and at least one code (5) unambiguously identifying the fitting (1) or the mobile rotating device (4) or the wireless (11) transmission of status data (3) and at least one code (5) unambiguously identifying the fitting (1) or the mobile rotating device (4) are accomplished by means of an external transmitting or receiving device (9) connected to the mobile rotating device (4) via an interface (6).

## Revendications

1. Dispositif rotatif mobile (4), destiné à des robinetteries (1) dans des conduites d'alimentation d'eau, de gaz, de chauffage collectif et de refroidissement collectif de l'évacuation d'eaux usées, ainsi que dans des conduites de transport d'huile et de gaz, le dispositif rotatif mobile (4)
- comportant des moyens destinés à enregistrer des données d'état (3) de la robinetterie (1) lors de l'exécution d'un ordre de réglage,
- comportant des moyens destinés à envoyer sans fil (11), conjointement les données d'état (3) et un code (5) identifiant la robinetterie (1) et/ ou le dispositif rotatif mobile (4),
- comportant des moyens destinés à identifier sans équivoque la robinetterie (1), et
- disposant en tant que moyens destinés à identifier sans équivoque la robinetterie (1) d'un lecteur de puces RFID, d'un lecteur de codes-barres de codes à traits ou d'autres codes unidimensionnels, bidimensionnels ou tridimensionnels et / ou d'un récepteur de données de positions envoyées par satellite.

2. Dispositif rotatif mobile (4) selon la revendication 1, le dispositif rotatif mobile (4) comportant des moyens destinés à réceptionner sans fil (11) un ordre de réglage d'une robinetterie (1), destinés à réceptionner au moins un code (5) identifiant la robinetterie (1) ou le dispositif rotatif mobile (4).

3. Dispositif rotatif mobile (4) selon l'une quelconque des revendications précédentes, les moyens destinés à envoyer conjointement sans fil (11) les données d'état (3) et un code (5) identifiant la robinetterie (1) et/ ou le dispositif rotatif mobile (4) comprenant un dispositif émetteur interne ou un dispositif émetteur (9) externe, connecté avec le dispositif rotatif mobile (4) par l'intermédiaire d'une interface (6).

4. Dispositif rotatif mobile (4) selon la revendication 2, la réception sans fil (11) d'ordres de réglage et d'au moins un code (5) identifiant la robinetterie (1) ou le dispositif rotatif mobile (4) ou l'émission sans fil (11) de données d'état (3) et d'au moins un code identifiant la robinetterie (1) ou le dispositif rotatif mobile (4) s'effectuant par l'intermédiaire d'un dispositif émetteur ou récepteur (9) externe, connecté avec le dispositif rotatif mobile (4) par l'intermédiaire d'une interface (6).

5. Dispositif rotatif mobile (4) selon l'une quelconque des revendications 1 à 4, les données d'état (3) étant constituées d'au moins la position de la robinetterie ou additionnellement d'informations sur le couple de rotation / la course de la robinetterie (1) ou les vibrations de la robinetterie (1), enregistrées chacune lors du processus de réglage.

6. Dispositif rotatif mobile (4) selon l'une quelconque des revendications 1 à 5, le dispositif rotatif mobile (4) étant conçu pour établir une liaison fixe mais amovible avec la robinetterie (1).

7. Dispositif rotatif mobile (4) selon l'une quelconque des revendications 1 à 6, les moyens destinés à envoyer conjointement sans fil (11) les données d'état (3) et un code (5) identifiant la robinetterie (1) et/ ou le dispositif rotatif mobile (4) cryptant les des données par technique de cryptage sur base matérielle ou logicielle.

8. Dispositif rotatif mobile (4) selon l'une quelconque des revendications 1 à 7, le dispositif rotatif mobile (4) comportant des moyens destinés à réceptionner de manière filaire ou sans fil (11) des données provenant d'autres dispositifs, comme par exemple des capteurs, et pour les envoyer, conjointement sans fil (11) avec des données d'état (3) de la robinetterie et l'au moins un code (5) identifiant la robinetterie (1) ou le dispositif rotatif mobile (4) à un système informatique (2) centralisé.

9. Système comprenant au moins un dispositif rotatif mobile (4) selon l'une quelconque des revendications précédentes et un système informatique (2) centralisé, le système informatique (2) centralisé étant conçu pour réceptionner sans fil (11) des données d'état envoyées par le dispositif rotatif mobile (4) et au moins un code (5) identifiant sans équivoque la robinetterie (1) ou le dispositif rotatif mobile (4).

10. Procédé, destiné à assurer l'entretien axé sur leur état de robinetteries non équipées d'un entrainement en rotation dans des conduites d'alimentation d'eau, de gaz, de chauffage collectif et de refroidissement collectif de l'évacuation d'eaux usées, ainsi que dans des conduites de transport d'huile et de gaz, lequel comporte les étapes suivantes consistant à :
i) procéder au réglage d'une robinetterie (1) au moyen d'un dispositif de rotation mobile (4) selon l'une quelconque des revendications 1 à 8,
ii) détecter les données d'état (3) de la robinetterie (1) au moyen du dispositif rotatif mobile (4) pendant le processus de réglage,
iii) transmettre sans fil (11) les données d'état (3) au moyen du dispositif rotatif mobile (4) vers le système informatique (2) centralisé, et
iv) transmettre sans fil (11) un code (5) identifiant sans équivoque la robinetterie (1) ou le dispositif rotatif mobile (4) au moyen du dispositif rotatif mobile (4), étant utilisé en tant que moyen destiné à identifier sans équivoque la robinetterie (1) un lecteur de puces RFID, un lecteur de codes-barres de codes à traits ou d'autres codes unidimensionnels, bidimensionnels ou tridimensionnels et / ou un récepteur de données de positions envoyées par satellite.

11. Procédé selon la revendication 10, comportant les étapes supplémentaires consistant à
(i) générer un ordre de réglage au moyen du système informatique (2) centralisé pour une robinetterie (1) qui n'est pas équipée durablement de manière fixe d'un actionneur, et
(ii) transmettre sans fil (11) l'ordre de réglage au dispositif rotatif mobile (4), conjointement avec un code (5) identifiant la robinetterie (1) ou le dispositif rotatif mobile (4).

12. Procédé selon la revendication 10 ou 11, la transmission sans fil (11) de l'ordre de réglage et d'au moins un code (5) identifiant sans équivoque la robinetterie (1) ou le dispositif rotatif mobile (4) ou l'envoi sans fil (11) de données d'état (3) et d'au moins un code (5) identifiant sans équivoque la robinetterie (1) ou le dispositif rotatif mobile s'effectuant au moyen d'un dispositif émetteur ou récepteur (9) externe, connecté avec le dispositif rotatif mobile (4) par l'intermédiaire d'une interface (6).
